# EUROPÄISCHE PATENTSCHRIFT

(11) **EP 3 469 027 B1**
(45) Veröffentlichungstag und Bekanntmachung des Hinweises auf die Patenterteilung: **21.10.2020**
(21) Anmeldenummer: 17731494.5
(22) Anmeldetag: 08.06.2017
(51) Int. Cl.: C09D 5/00, C09D 5/08, C09D 175/00

(54) **IN WÄSSRIGER PHASE STABILISIERTE BINDEMITTEL**
BINDERS STABILIZED IN AN AQUEOUS PHASE
LIANTS STABILISÉS EN PHASE AQUEUSE

(30) Priorität: 10.06.2016 DE 102016210336
(43) Veröffentlichungstag der Anmeldung: 17.04.2019
(73) Patentinhaber: Chemetall GmbH, 60487 Frankfurt am Main (DE)
(72) Erfinder: BREMSER, Wolfgang, 33098 Paderborn (DE); DROLL, Martin, 33098 Paderborn (DE); SEEWALD, Oliver, 33098 Paderborn (DE); NIESEN-WARKENTIN, Evgenija, 33098 Paderborn (DE); SCHACHTSIEK, Lars, 33098 Paderborn (DE); TRAUT, Manuel, 33098 Paderborn (DE); SCHWAMB, Michael, 60487 Frankfurt (DE); WASSERFALLEN, Daniel, 60487 Frankfurt (DE); SOTKE, Vera, 60487 Frankfurt (DE); FRENKEL, Aliaksandr, 60487 Frankfurt (DE); EILINGHOFF, Ron, 60487 Frankfurt (DE); GEROLD, Stephanie, 60487 Frankfurt (DE); KHELFALLAH, Nawel Souad, 60487 Frankfurt (DE); KLEIMENHAGEN, Felix, 5200 Brugg (CH)
(74) Vertreter: BASF IP Association
(86) Internationale Anmeldenummer: PCT/EP2017/063913
(87) Internationale Veröffentlichungsnummer: WO 2017/211925

(56) Entgegenhaltungen:
- EP-A1- 2 209 828
- EP-A1- 2 221 330
- WO-A1-2010/025840
- WO-A1-2013/110606

## Beschreibung

Die Erfindung betrifft in wässriger Phase stabilisierte Bindemittel und Partikel zur Co-Abscheidung mit ionogenen Gelbildnern. Als Partikel werden in diesem Sinne organische und anorganische Pigmente, funktionale Füllstoffe und deren Mischung verstanden.

Aus den Dokumenten WO 2012034976 A1, WO 2013117611 A1 und WO 2015004256 A1 sind Verfahren zum stromlosen Beschichten von metallischen Substratoberflächen bekannt, die anionisch, zwitterionisch, sterisch, kationisch und/oder nicht ionisch stabilisierte Bindemittel benutzen und diese unter Zusatz von Polyelektrolyten durch ionogene Gelbildung spülfest abscheiden sowie durch Trocknen sowie Einbrennen verfestigen.

Im Hinblick auf die industrielle Nutzung von Verfahren zum stromlosen Beschichten mittels ionogener Gelbidung von verschiedenen Substratoberflächen, insbesondere solchen aus verschiedenen Metallen, sowie den steigenden Anforderungen an die Beschichtungen hinsichtlich Korrosions- und Kratzfestigkeit, besteht das Interesse eine breite Palette von Bindemitteln für die Ausbildung von stabilen wässrigen Dispersionen verfügbar zu machen. Dabei sollen die erhaltenen Dispersionen unter Zusatz von Polyelektrolyten durch ionogene Gelbildung abscheiden. Die Spülfestigkeit der abgeschiedenen Gele ist dabei ein wichtiges Kriterium und muss bei einem Spülverfahren dem technisch üblichen Spritzdruck von mindestens 0,2 Bar oder einem Tauchspülverfahren standhalten, d.h., dass sich die abgeschiedene Schicht nicht ablöst. Es entsteht eine gleichmäßige geschlossene Beschichtung auf metallischen Oberflächen.

Die Erfindung hat sich die Aufgabe gestellt, in wässriger Phase stabilisierte Bindemittel und ein Verfahren zur Herstellung solcher Dispersionen zu beschreiben. Die so stabilisierten Bindemittel, im folgenden Trägerbindemittel genannt, bilden stabile wässrige Dispersionen, die unter Zusatz von Polyelektrolyten durch Metallkationen induziert ionogene Gele auf verschiedenen Substratoberflächen bilden. Diese Schichten zeichnen sich durch eine sehr gute Spülfestigkeit aus, die einem Spritzdruck von mindestens 0,2 Bar oder einem Tauchspülverfahren standhalten, wobei eine gleichmäßige geschlossene Schicht nach der Spülung erhalten bleibt. Gemäß der vorliegenden Erfindung wird unter stabiler, wässriger Dispersion eine kolloidale, wässrige Lösung verstanden, in der die Teilchen durch abstoßende Kräfte auseinander gehalten werden.

Weiterhin sind im Sinne der vorliegenden Erfindung Polyelektrolyte: Polysaccharide, die zur ionogenen Abscheidung dienen und die bereits ausführlich in den Schriften WO 2012034976 A1, WO2013117611 A1 und WO 2015004256 A1 beschrieben worden sind.

Als Substratoberflächen kommen in Betracht: metallische Untergründe, wie Stahl, verzinkter Stahl, Aluminium, deren Legierung und metallisch dotierte Werkstoffe.

Die EP 2 221 330 A1, die EP 2 209 828 A1, die WO 2010/025840 A1 und die WO 2013/110606 A1 offenbaren wässrige Polyurethan und/oder wässrige Polyurethan-/ Harnstoffdispersionen die mit einem kovalent gebundenen Polyalkylenoxid-Alkylether hydrophil modifiziert wurden sowie Verfahren zu deren Herstellung.

Erfindungsgemäß wird die Aufgabe gelöst durch in wässriger Phase stabilisierte Trägerbindemittel zur Co-Abscheidung mit ionogenen Gelbildnern, wobei ein Bindemittel mittels reaktiver Gruppen am Bindemittel mit einem hydrophilen, funktionalen Molekül modifiziert ist, des hydrophobe Endgruppe reaktiv ist. Das Trägerbindemittel kann ein Harz oder Polymer sein. Es wird vorzugsweise ausgewählt aus der Gruppe bestehend aus Polyacrylaten, Polyurethanen, Polyepoxiden, Urethanacrylate, aromatische und (cyclo)-aliphatische Epoxyacrylate, Polyester sowie deren Mischung, die mittels reaktiver Gruppen am Bindemittel, durch hydrophile, funktionale Moleküle modifiziert und in wässriger Phase stabilisiert werden. Unter reaktiven Gruppen am Bindemittel werden im Sinne der vorliegenden Erfindung verstanden: Isocyanate, Hydroxyle, Carboxyle, Oxirane, Vinyle und Amine.

Vorteilhafterweise ist das hydrophile, funktionale Molekül ein mit einer hydrophoben Endgruppe versehenes Telomer aus Ethylenglykoleinheiten, wobei die Anzahl der Ethylenglykoleinheiten im Telomer 1 bis 20 beträgt. Eine Anzahl von Ethylenglykoleinheiten im Bereich von 5 bis 10 ist von Vorteil, da dann eine gute Balance zwischen hydrophilen-hydrophoben Anteilen entsteht.

Besonders bevorzugt weist das hydrophile, funktionale Molekül ein Molekulargewicht Mn zwischen 300 und 1000 g/Mol auf.

Ganz besonders bevorzugt besitzt das hydrophile, funktionale Molekül eine C₁ - C₄-Alkyl- oder eine C₆ - C₁₂-Aryl-Endgruppe.

Zur Herstellung des Trägerbindemittels erfolgt eine kovalente Anbindung des hydrophilen, funktionalen Moleküls an das Bindemittel. Das so erzeugte Trägerbindemittel bildet in wässrigen Phasen, mindestens über einen Zeitraum von 6 Monaten, vorzugsweise von bis zu 12 Monaten oder mehr eine stabile Dispersion.

Die nicht am ursprünglichen Bindemittel angebundene hydrophobe Endgruppe des hydrophilen, funktionalen Moleküls ist reaktiv. Darunter werden im Sinne der vorliegenden Erfindung insbesondere Vinyl- oder Hydroxylgruppen verstanden, die thermisch weiter reagieren können. Die Gruppen können entweder durch radikalische Reaktion oder durch Additions- oder Kondensations-Reaktionen während des Einbrennprozesses zu einer Vernetzung beitragen. Dadurch kann eine vernetzte, geschlossene Beschichtung erzeugt werden, die beständig gegenüber Wasser, Chemikalien und Korrosion ist und eine verbesserte Kratzfestigkeit, Bleistifthärte, eine hohe Flexibilität, Dehnbarkeit, Kaltverformbarkeit und eine große Adhäsion zeigt.

Die vorstehend angeführten Partikel sind vorteilhafterweise durch Silane, Aminosilane, phosphorgruppenhaltige und/oder aminhaltige organische Moleküle, Phosphate oder durch leitfähige oder nicht leitfähige organische Beschichtungen oberflä-chenmodifiziert, wobei die Beschichtungen reaktive Gruppen zur kovalenten oder Wechselwirkungsanbindung an das Trägerbindemittel enthalten können, die funktionale Gruppen zur Anbindung an die zu behandelnde Substratoberfläche aufweisen. Partikel, die keine oder unpassende, reaktiven Gruppen für eine Anbindung auf ihrer Oberfläche haben, können durch Adsorption der hydrophilen, funktionalen Moleküle auf ihrer Oberfläche verfügbar gemacht werden.

Das erfindungsgemäße Verfahren zur Herstellung eines Trägerbindemittels besteht darin, dass das ursprüngliche Bindemittel durch Umsetzung der reaktiven Gruppen des Bindemittels unter Ausbildung von 1 bis 9 Ketteneinheiten des hydrophilen, funktionalen Moleküls modifiziert wird.

Die hergestellten Trägerbindemittel haben zusätzliche emulgierende Eigenschaften und können dadurch die ionogene Abscheidung von anderen Bindemitteln und Partikeln ermöglichen.

Eine nicht ausschließliche Möglichkeit zur Herstellung eines beschriebenen Trägerbindemittels ist die Umsetzung eines hydrophilen, funktionalen Moleküls durch eine Urethan bildende Reaktion. Die Reaktion wird in Abhängigkeit der Viskosität vorzugsweise in Gegenwart von organischen Lösemitteln vorgenommen, die anschließend entfernt werden.

Es werden ein Isocyanat-funktionalisiertes Polyethylenglykolmolekül als hydrophile Komponente und ein Polyesterpolyol mit einem Molekulargewicht Mn im Bereich von 1000 bis 3000 g/Mol eingesetzt. Wobei als reaktive Gruppen Hydroxylgruppen am ursprünglichen Bindemittel vorhanden sind, die zur Bildung von Urethanbindungen befähigt sind.

Vorteilhafterweise weist das eingesetzte Polyesterpolyol reaktive Gruppen im Bereich von 100 g/eq bis 5000 g/eq auf.

Eine weitere bevorzugte Herstellung eines Trägerbindemittels erfolgt in der nachfolgend beschriebenen Weise:
Es werden ein mit einem mehrkernigen Isocyanat (z.B. Desmodur® VL) funktionalisiertes Polyethylenglykolmolekül (bevorzugt Polyethylenglykolmethylether) mit Diisopropylamin (DIPA) oder mit DIPA und/oder vorzugsweise Butoxim (oder anderen Ketoximen) oder anderen mit Isocyanaten reaktionsfähigen, funktionelle Gruppen tragende Moleküle zur Reaktion gebracht und kovalent verbunden.
Als reaktive Gruppen sind Hydroxylgruppen oder bevorzugt sekundäre Amine an den Molekülen vorhanden, die zur Bildung von z.B. Urethanbindungen oder Harnstoffderivaten befähigt sind.

Eine besonders bevorzugte Variante einer Trägerdispersion auf Polyurethan(PU)-Dispersionsbasis mit Acrylat terminierten Polymerketten wird in folgender Synthesevorschrift beschrieben. Diese Trägerdispersion auf PU-Dispersionsbasis führt in Gegenwart der vorab ausgeführten emulgierenden Trägerbindemittel zu besonders spülfesten Beschichtungen mit hohem Korrosionsschutz. Bevorzugt erfolgt die Modifizierung des ursprünglichen PU-Bindemittels in der Weise, dass in einer ersten Stufe das Bindemittel mit einer Isocyanat-terminierten Form vorgelegt und in einer zweiten Stufe mit dem hydrophilen, funktionalen Molekül durch eine Urethanbildung umgesetzt wird.

Die Hydrophilie der Trägerdispersion auf PU-Dispersionsbasis mit Acrylat terminierten Polymerketten kann durch Zugabe von Emulgatoren auf Basis von tertiären Aminen wie fettsäuremodifizierte Emulgatoren mit terminalen hydrophilen tertiären Aminverbindungen wie dem kommerziell erhältlichen FAME® EFKA6225 erhöht werden, so dass eine ausreichende Stabilisierung im pH-Wert-Bereich bis pH 3 erfolgen kann.

Die Erfindung wird nachfolgend an Hand von vier Ausführungsbeispielen näher erläutert.

### Beispiel 1: Herstellung einer Polyurethanacrylatdispersion Hydroxyethyl-methylacrylat terminiert (PUD-HEMA) - Dispersion I

Der Versuchsaufbau besteht aus einem 500 mL Glasreaktor mit Rückflusskühler, einer Rührführung mit Gaseinlass, einem RPG Rührmotor und einem wandgängigen Ankerrührer. Zum Erhitzen werden ein Magnetrührer mit Heizfunktion und Temperaturfühler sowie ein Silikonölbad verwendet. Während der gesamten Reaktion ist unter Ausschluss von Wasser und einem ständigen Stickstoffstrom zu arbeiten.

Zu Beginn wird das Polyesterpolyol Priplast® 3192 oder Priplast® XL 101 der Firma Croda) in Butanon-2 vorgelegt und bei 65°C für 10 Minuten (min) bei einer Rührergeschwindigkeit von 120 U/min homogenisiert. Im Anschluss wird das Diol, Neopentylglycol (NPG) und das carboxylgruppenhaltige Diol, 2,2-Bis-hydroxymethyl-propionsäure (DMPA) als Kettenverlängerer hinzugegeben und für weitere 15 min homogenisiert. Anschließend wird das Diisocyanat, 4,4-Diphenylmethan-diisocyanat hinzugegeben. Die Temperatur der Lösung wird für 6 h bei 82°C, was einer Außenmanteltemperatur von 94°C entspricht, gehalten.

Nach 6 h werden die teilweise hydrophilen Bausteine für die Endgruppe in Form von 2-Hydroxyethyl-methacrylat (HEMA) hinzugegeben. Nach etwa 80 min wird Dimethylethanolamin hinzugegeben, um die Carboxylfunktionen zu neutralisieren. Ist dies geschehen wird die Reaktion mit Ethylenglykolmonobutylether versetzt. Zum Schluss wird das VE-Wasser hinzugegeben und unter ständigem Rühren abgekühlt sowie das Lösemittel abrotiert.

Die Bestimmung des Festkörperanteils ergab einen Wert von 22,71 Gew.-%. Die Teilchengröße des Polymers ist ca. 73 nm, die mittels Nanozetasizer bestimmt wurde.

### Beispiel 2: Herstellung einer Polyurethanacrylatdispersion Polyethylenglykolmethacrylat terminiert (PUD-PEGMA500) - Dispersion II

In einem 500 mL Glasreaktor mit Rückflusskühler, einer Rührführung mit Gaseinlass, einem RPG Rührmotor und einem wandgängigen Ankerrührer wird das Polyesterpolyol Priplast® 3192, der Firma Croda in Butanon-2 vorgelegt und bei 65°C für 10 min, bei einer Rührergeschwindigkeit von 120 U/min homogenisiert. Im Anschluss wird das Diol, Neopentylglycol (NPG) und das carboxylgruppenhaltige Diol, 2,2-Bis-hydroxymethyl-propionsäure (DMPA) als Kettenverlängerer hinzugegeben und für weitere 15 min homogenisiert. Anschließend wird das Diisocyanat, 4,4-Diphenylmethan-diisocyanat hinzugegeben. Die Temperatur der Lösung wird für 6 h bei 82°C, was einer Außenmanteltemperatur von 94°C entspricht, gehalten. Nach 6 h werden die teilweise hydrophilen Bausteine für die Endgruppe in Form von Poly(ethylenglykol)methacrylat hinzugegeben mit einem durchschnittlichen Zahlenmittel des Molekulargewichts Mn=500 g/Mol (PEGMA-500). Nach etwa 80 min wird Dimethylethanolamin hinzugegeben, um die Carboxylfunktionen zu neutralisieren. Ist dies geschehen wird die Reaktion mit Ethylenglykolmonobutylether versetzt. Zum Schluss wird das VE-Wasser hinzugegeben und im Anschluss wird die Reaktion unter ständigem Rühren für 30 Minuten abgekühlt und das Lösemittel abrotiert.

Der Festkörperanteil von PUD-PEGMA500 beträgt 25 Gew.-%. Die Teilchengröße des Polymers beträgt ca. 73 nm, wie es mittel Nanozetasizer gemessen wird und mit einem Festkörpergehalt (FK) von 24,80 Gew.-%.

Rezeptur Priplast®-3192-PUD-PEGMA-500 ist folgend angegeben

| Stoff | Struktur | Einwaage [g] |
|---|---|---|
| Polyesterpolyol | 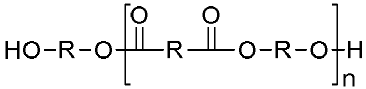 | 321,6 |
| Methylethylketon | 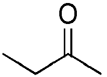 | 800,01 |
| 4,4-Diphenylmethan-diisocyanat | 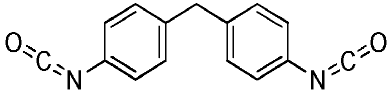 | 100.12 |
| Neopentylglycol | 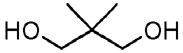 | 2,9157 |
| 2,2-Bis-hydroxymethylpropionsäure | 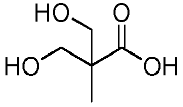 | 19,2087 |
| 2-Hydroxyethyl-methacrylat | 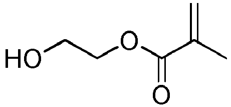 | - |
| Poly(ethylenglycol)methacrylat | 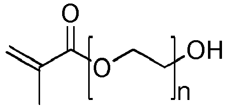 | 32,2031 |
| Dimethylethanolamin | 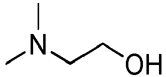 | 10,2109 |
| Ethylenglykolmonobutylether | 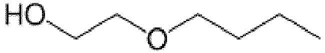 | 28,0333 |
| Bidestilliertes Wasser | 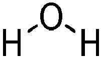 | 1000,01 |

### Eine Formulierung eines Beschichtungsstoffes, die einem Spritzdruck von 0,5 bar standhält, ergibt sich aus der folgenden Mischung:

Formulierung bestehend aus 2,5 g Dispersion **I**, 2,5 g Dispersion **II** und 5 g blockiertem Isocyanatvernetzer mit Polyethylenglykoleinheiten als Trägerdispersion und wird mittels Ultraturrax (IKA T 10 basic ULTRA-TURRAX® - IKA mit S 10 N - 10 G Dispergierwerkzeug) für 10 min auf Stufe 4 vermischt. Die Einbringung erfolgt mit einer solchen Scherkräfte, dass sich eine einheitliche Mizelle ausbildet, damit das Gesamtgemisch ausreichend stabil bei pH-Wert Absenkung ist.

Alternativ können bei größeren Mengen der Mischung (1 kg) z.B. auch Labordisperser mit low viscosity blades verwendet werden, die ca. 30 min bei 2000 U/min eingeschaltet sind, um eine entsprechend homogene Verteilung der Bestandteile zu erzeugen.
Besonders hoher Korrosionsschutz wird zusätzlich mit der Zugabe von ca. 1-2 g Bisphenol A-Diglycidylether (BADGE) oder mit Bisphenol F-Diglycidylether erzeugt.

Danach werden 12 g einer 1 Gew.-% igen Lösung des Gelbildners zugegeben und über Nacht eingerührt. Der Festkörpergehalt von Dispersion I und II wird für diese Anwendung auf 20 Gew.-% -25 Gew.-% eingestellt.

### Beispiel 3: Synthesevorschrift Trägerdispersion

Eine weitere bevorzugte Mischungsvariante mit hoher Spülfestigkeit und hohem Korrosionsschutz ist die Mischung zweier als Trägerdispersionen bestehend aus einer Polyacrylat-DPE-Trägerdispersionen mit einer weiteren Trägerdispersion, die als hydrophiler Isocyanat-Vernetzer mit einer Polyethylenglykolmethylether ausgestattet ist wie z.B. das Produkt BL 5335 der Fa. Covestro + BADGE, die eine spülfeste Beschichtung ausbilden.

Die zweistufige Synthese wird in einem 5L Glasreaktor mit wandgängigem doppelten Anker-Rührer durchgeführt. Außerdem werden Rückflusskühler, Stickstoffein- und auslass, Blasenzähler, Heizpilz mit Thermostat und der Gravidos-Zulauf befestigt.
In der ersten Stufe werden 1300g Wasser im Reaktor vorgelegt und bei einer Rührergeschwindigkeit von 120 U/s und bei vollen Stickstoffstrom auf 40°C erwärmt. Wenn die 40°C erreicht sind, wird der Stickstoffstrom auf 1 Blase/s reduziert. Anschließend werden 25 g Styrol, 21,8 g Polyethylenglykolmethylethermethacrylat Mn 500 g/Mol, 2,055 g 1,1- Diphenylethylen hinzugegeben. 100 g Wasser werden zum Nachspülen verwendet. Die Lösung ca. 5 min rühren lassen, dann 4,056 g Ammoniumperoxodisulfat in 100 g Wasser lösen und hinzugeben. Die Lösung wird dann innerhalb einer Temperatur-Zeit- Rampe von ca. 45 min auf 90°C erwärmt.
In der zweiten Stufe wird aus einem Gravidos-Behälter eine Mischung aus 500 g Butylmethacrylat und 25 g Hydroxyethylmethacrylat mittels Gravidos-System innerhalb von 4 Stunden mit einer Dosierrate von ca. 2,188 g/min zugetropft. Aus einem zweiten Gravidos-Behälter wird 50 g einer Epoxyacrylsäure in 50 g Butanon über 4 Stunden mit einer Dosierrate von 0,416 g zudosiert. Die Herstellung der Epoxyacrylsäure erfolgt wie nachfolgend beschrieben. Das Butanon wird über den Stickstoffstrom zum Teil wieder aus dem Reaktor entfernt. Es kann aber auch nachträglich noch fast vollständig an einem Rotationsverdampfer entfernt werden. Nach der vollständigen Zugabe der Monomere wird 2 Stunden bei 90°C weitergerührt. Die Dispersion wird abgekühlt, filtriert und anschließend werden die Teilchengröße des Festkörpers und pH-Wert sowie der Festkörpergehalt (FK) bestimmt.
Zu dieser Dispersion, die so ca. eine FK von 40 Gew.-% aufweist, können dann 10-50 Gew.-% BL 5335 zugegeben werden. Dann müssen ca. die 1-1,2 fachen Menge Polysaccharide Lösung hergestellt werden mit einem FK von 1 Gew.-% und mit der Dispersion für ca. 24 h gemischt werden.

### Beispiel 4: Synthesevorschrift Trägerbindemittel mit Emulgatoreigenschaften

Der Versuchsaufbau besteht aus einem 500 mL Glasreaktor mit Rückflusskühler, einer Rührführung mit Gaseinlass, einem RPG Rührmotor und einem wandgängigen Ankerrührer. Zum Erhitzen werden ein Magnetrührer mit Heizfunktion und Temperaturfühler sowie ein Silikonölbad verwendet. Während der gesamten Reaktion ist unter Ausschluss von Wasser und einem ständigen Stickstoffstrom zu arbeiten.

Zu Beginn wird Polyethylenglykolmethylether Mn 750 g/Mol und 79,8 g eines mehrkernigen Methyldiphenylisocyanats (MDI) wie Desmodur® VL der Firma Covestro oder Bayer vorgelegt und auf 70°C erhitzt für 2 Stunden unter ständigem Rühren bei 120 U/min mit einem Ankerrührer. Dann werden 17,4 g Butoxim unter Rühren hinzugegeben und die Komponenten reagieren 2 h bei 70°C Reaktorinnentemperatur. Danach werden 20,21 g Diisopropylamin hinzugegeben und 40 min bei 70°C gerührt. Die vollständige Umsetzung der Reaktion kann mit Hilfe von Infrarot-Spektren (IR Spektren) anhand der Abnahme der Isocyanatbanden bei einer Wellenzahl zwischen 2200 und 2400 cm⁻¹ überwacht werden. Anschließend wird mit bidestilliertem Wasser ein Festkörperanteil des Bindemittels von 35-40 Gew.-% eingestellt und unter ständigem Rühren sowie dem Einbringen von Scherkräften eine Dispersion hergestellt, die für unterschiedliche Harztypen wie z.B. Bisphenol A-Digycidylether oder PUD Harze emulgierend wirkt.

## Patentansprüche

1. In wässriger Phase stabilisierte Trägerbindemittel zur Co-Abscheidung mit ionogenen Gelbildnern, **dadurch gekennzeichnet, dass** ein Bindemittel mittels reaktiver Gruppen am Bindemittel mit einem hydrophilen, funktionalen Molekül modifiziert ist, dessen hydrophobe Endgruppe reaktiv ist.

2. Trägerbindemittel nach Anspruch 1, **dadurch gekennzeichnet, dass** die hydrophobe Endgruppe des hydrophilen, funktionalen Moleküls eine Vinyl- und/oder Hydroxygruppe aufweist.

3. Trägerbindemittel nach Anspruch 1 oder 2, sind **dadurch gekennzeichnet, dass** das hydrophile, funktionalen Molekül ein mit einer hydrophoben Endgruppe versehenes Telomer aus Ethylenglykoleinheiten ist, wobei die Anzahl der Ethylenglykoleinheiten im Telomer 1 bis 20 beträgt.

4. Trägerbindemittel nach Anspruch 1 bis 3, **dadurch gekennzeichnet, dass** das hydrophile, funktionale Molekül ein Molekulargewicht zwischen 300 und 1000 g/Mol aufweist.

5. Trägerbindemittel nach Anspruch 1 bis 4, **dadurch gekennzeichnet, dass** das hydrophile, funktionale Molekül eine C₁ - C₄-Alkyl- oder eine C₆ - C₁₂-Aryl-Endgruppe besitzt.

6. Trägerbindemittel nach Anspruch 1 bis 5, **dadurch gekennzeichnet, dass** es anorganische Partikel mit einer Partikelgröße von 5 nm bis 800 nm in einer Menge von 0,01 bis 50 Gew.-% enthält.

7. Trägerbindemittel nach Anspruch 6, **dadurch gekennzeichnet, dass** die anorganischen Partikel ausgewählt sind aus der Gruppe bestehend aus Farb- und Glanzeffekt-; Korrosionsschutz-, UV-Schutz-Pigmenten oder Partikeln mit anderen funktionellen Eigenschaften, ohne eine vorzeitige Gelierung der Dispersion durch Bildung mehrwertiger Kationen zu verursachen.

8. Trägerbindemittel nach Anspruch 7, **dadurch gekennzeichnet, dass** die anorganischen Partikel durch Silane, Aminosilane, phosphorgruppenhaltige und/oder aminhaltige organische Moleküle, Phosphate oder durch leitfähige oder nicht leitfähige organische Beschichtungen oberflächenmodifiziert sind, wobei die Beschichtungen reaktive Gruppen zur kovalenten oder Wechselwirkungsanbindung an das Trägerbindemittel enthalten können.

9. Trägerbindemittel nach Anspruch 8, **dadurch gekennzeichnet, dass** es sich bei den reaktiven Gruppen der anorganischen Partikel um primäre, sekundäre, tertiäre Amin-, Epoxy-, Isocyanat-oder Hydroxylgruppen handelt.

10. Verfahren zur Herstellung eines in wässriger Phase stabilisierten Trägerbindemittels gemäß einem oder mehreren der Ansprüche 1 bis 8, **dadurch gekennzeichnet, dass** das Bindemittel. durch Umsetzung der reaktiven Gruppen des Bindemittels unter Ausbildung von 1 bis 9 Ketteneinheiten des hydrophilen, funktionalen Moleküls modifiziert wird.

## Claims

1. A carrier binder stabilized in an aqueous phase, for codeposition with ionogenic gel-formers, wherein a binder is modified by means of reactive groups on the binder with a hydrophilic, functional molecule whose hydrophobic end group is reactive.

2. The carrier binder according to claim 1, wherein the hydrophobic end group of the hydrophilic, functional molecule comprises a vinyl and/or hydroxyl group.

3. The carrier binder according to claim 1 or 2, wherein the hydrophilic, functional molecule is a telomer which is provided with a hydrophobic end group and is composed of ethylene glycol units, the number of ethylene glycol units in the telomer being 1 to 20.

4. The carrier binder according to claim 1 to 3, wherein the hydrophilic, functional molecule has a molecular weight between 300 and 1000 g/mole.

5. The carrier binder according to claim 1 to 4, wherein the hydrophilic, functional molecule possesses a C₁-C₄ alkyl or a C₆-C₁₂ aryl end group.

6. The carrier binder according to claim 1 to 5, which comprises inorganic particles having a particle size of 5 nm to 800 nm in an amount of 0.01 to 50 wt%.

7. The carrier binder according to claim 6, wherein the inorganic particles are selected from the group consisting of color-effect and luster-effect pigments, anticorrosion pigments, UV protection pigments, or particles having other functional properties, without causing premature gelling of the dispersion through formation of polyvalent cations.

8. The carrier binder according to claim 7, wherein the inorganic particles are surface-modified with silanes, aminosilanes, phosphorus-group-containing and/or amine-containing organic molecules, phosphates, or with conductive or non-conductive organic coatings, it being possible for the coatings to comprise reactive groups for covalent or interactional attachment to the carrier binder.

9. The carrier binder according to claim 8, wherein the reactive groups of the inorganic particles are primary, secondary, tertiary amine, epoxy, isocyanate or hydroxyl groups.

10. A method for producing a carrier binder stabilized in an aqueous phase according to one or more of claims 1 to 8, wherein the binder is modified by reaction of the reactive groups of the binder to form 1 to 9 chain units of the hydrophilic, functional molecule.

## Revendications

1. Liants supports stabilisés en phase aqueuse pour la coprécipitation avec des agents gélifiants ionogènes, **caractérisés en ce qu'**un liant est modifié au moyen de groupes réactifs sur le liant avec une molécule fonctionnelle hydrophile, dont le groupe terminal hydrophobe est réactif.

2. Liants supports selon la revendication 1, **caractérisés en ce que** le groupe terminal hydrophobe de la molécule fonctionnelle hydrophile comprend un groupe vinyle et/ou hydroxy.

3. Liants supports selon la revendication 1 ou 2, **caractérisés en ce que** la molécule fonctionnelle hydrophile est un télomère constitué d'unités éthylène glycol, muni d'un groupe terminal hydrophobe, le nombre d'unités éthylène glycol dans le télomère étant de 1 à 20.

4. Liants supports selon les revendications 1 à 3, **caractérisés en ce que** la molécule fonctionnelle hydrophile présente un poids moléculaire compris entre 300 et 1 000 g/mol.

5. Liants supports selon les revendications 1 à 4, **caractérisés en ce que** la molécule fonctionnelle hydrophile comprend un groupe terminal alkyle en C₁-C₄ ou aryle en C₆-C₁₂.

6. Liant support selon les revendications 1 à 5, **caractérisé en ce qu'**il contient des particules inorganiques ayant une taille de particule de 5 nm à 800 nm en une quantité de 0,01 à 50 % en poids.

7. Liant support selon la revendication 6, **caractérisé en ce que** les particules inorganiques sont choisies dans le groupe constitué par les pigments colorés et à effet brillant ; les pigments anticorrosion, les pigments de protection contre les UV ou les particules ayant d'autres propriétés fonctionnelles, sans provoquer une gélification prématurée de la dispersion par formation de cations polyvalents.

8. Liant support selon la revendication 7, **caractérisé en ce que** les particules inorganiques sont modifiées en surface par des silanes, des aminosilanes, des molécules organiques contenant des groupes phosphore et/ou contenant des amines, des phosphates ou par des revêtements organiques conducteurs ou non conducteurs, les revêtements pouvant contenir des groupes réactifs pour la liaison covalente ou par interaction sur le liant support.

9. Liant support selon la revendication 8, **caractérisé en ce que** les groupes réactifs des particules inorganiques consistent en des groupes amine, époxy, isocyanate ou hydroxyle primaires, secondaires, tertiaires.

10. Procédé de fabrication d'un liant support stabilisé en phase aqueuse selon une ou plusieurs des revendications 1 à 8, **caractérisé en ce que** le liant est modifié par mise en réaction des groupes réactifs du liant avec formation de 1 à 9 unités de chaîne de la molécule fonctionnelle hydrophile.
